# EUROPEAN PATENT APPLICATION

(11) **EP 1 437 861 A2**
(43) Date of publication of application: **14.07.2004**
(21) Application number: 04300006.6
(22) Date of filing: 06.01.2004
(51) Int. Cl.: H04L 12/24

(54) **Bulk service configuration in communications networks**

(30) Priority: 09.01.2003 US 338672
(71) Applicant: ALCATEL, 75008 Paris (FR)
(72) Inventor: Onno, Robert, Carlsbad Springs, Ontario K0A 1KO (CA); Satvinder, Singh Bawa, Ottawa Ontario K2M 2X8 (CA); Rachniowski, Margaret, Nepean Ontario K2R 1A1 (CA)
(74) Representative: Feray, Valérie

(57) **Abstract**

A bulk DSL service provisioning configuration tool for use in a network management context and method are presented. The bulk DSL service provisioning tool enables the specification of a programmable configuration request including specifying an target entity list and a configuration template. In turning up a subscriber, the configuration template is further populated with: operational parameter values used configuring a corresponding DSL port associated with the subscriber, a request to setup a cross connect at DSLAM node associated with the subscriber's DSL port, and a request to setup a data link between the DSLAM node and a broadband remote access server node.

Advantages are derived from an ability to perform controlled large scale DSL service configuration management in a network management context at reduced service provisioning overheads.

## Description

### Field of the invention

The invention relates to network management, and in particular to methods of performing bulk service configuration management in support of service activation.

### Background of the invention

Communications services are provided over communication network infrastructure including network nodes, and interconnecting links. Typically a variety of network elements are employed, each of which provides a specialized function. Communications network nodes may include more than one network element. Content is conveyed over the interconnecting links in accordance with multiple transport protocols, each of which addresses particular service needs.

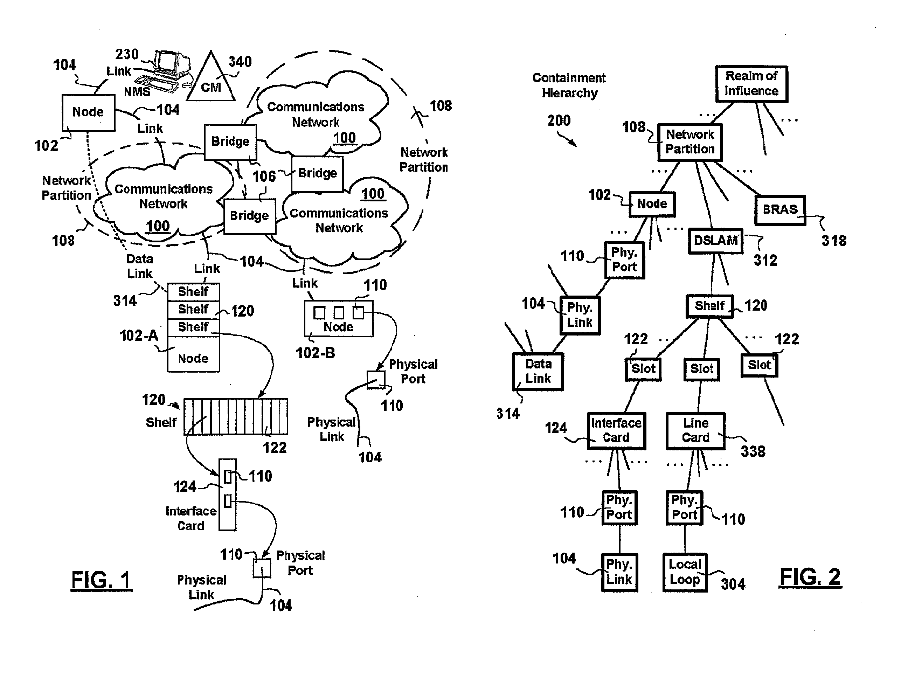

FIG. 1 is a schematic diagram showing interconnected network elements implementing connected communications networks.

Network nodes 102,102-A, 102-B, 106 are physically interconnected via physical links 104 in communications networks 100. Communications networks 100 may be bridged via bridge network nodes 106 to enable data content exchange therebetween. Connected communications networks 100 can be grouped defining areas of focus and influence for the purposes of network management, known as network partitions 108.

All communications network equipment is subject to design choices which are bound to differ from vendor to vendor. For example, as shown schematically in FIG. 1, an equipment vendor may chose to implement an integral network node device 102-B having a switching processor and a group of ports 110. Another equipment vendor may chose a customizable implementation of a network node 102-A including: a switching fabric, an equipment rack divided into shelves, each shelf 120 having slot connectors 122 for connection with interface cards, each interface card 124 having at least one port 110.

Network management is concerned, at least in part, with monitoring managed communications network equipment to ensure adherence to a defined communications network state. Configuration management is concerned with the definition of the communications network state which includes configuring operational parameters associated with field-installed managed communications network equipment to operate in a desired fashion. Service activation configuration management is concerned with configuring operational parameters associated with field-installed managed edge communications network equipment to enable connection with, and exchange content with Customer Premise Equipment (CPE).

In the prior art an operator would manually configure each managed network element (equipment and/or entity). The operator would employ a vendor and network equipment specific Element Management System (EMS) to access a corresponding specific piece of field-installed communications network equipment, and use manual command entry to effect each desired configuration change.

Performing such manual configurations on a large number of communications network nodes and the associated equipment is time consuming, costly, and error-prone. One of the biggest drawbacks to using the time consuming manual methods is that configuration management is to be performed within specific service time windows so as to minimally impact service provisioning. Performing large scale manual configuration management has and will continue to be a bottleneck in maintaining a high level of managed communications network reliability, availability and serviceability (RAS) as trends in the field of communications show an increasing demand for services, provided over an expanding and increasingly complex communications network infrastructure.

An improvement to the manual configuration approach includes custom script writing which enables performing specific configurations via a batch of commands in an EMS configuration management context. As a simple bulk configuration management example, a custom script may be used in configuring the size of an input buffer for each port 110 of a single vendor specific communications network node type. Using such configuration scripts reduces somewhat the time required to configure all ports 110 of a network node 102-B as the density of ports 110 per network node 102-B increases.

However, if only a subset of ports 110 needs to be configured for a network node 102(A/B), the operator, besides using the EMS to access each network node 102(A/B), must dedicate time to manually select the ports 110 to be configured. As the number of network nodes 102 to be configured increases and the density of ports 110 per communications network node 102 increases to fill service demand, the time needed to select the communications network nodes 102 and the ports 110 also increases. Further custom command scripts must be defined for each vendor communications network equipment type as the configuration command sets may vary. The inability to re-use custom scripts between equipment types for commonly performed operations reduces efficiency in developing custom scripts.

Certain advancements have been proposed and implemented including: the use of the Simple Network Management Protocol (SNMP) to reduce reliance on multi-vendor EMS solutions. However, the SNMP solution: is not suited for certain applications leading to an increased configuration management overhead, not widely adopted by all vendors, and/or is not implemented on all vendor communications network equipment types.

Custom command scripts are more efficient than performing the operations manually, however errors can still occur. As the scripts can be executed faster than manual command input, in an attempt to comply with the stringent time requirements imposed by management time windows, inadvertent errors in command scripts take effect, in affecting the operation of the configured equipment, at corresponding fast rates. Typical command script execution is performed without regard to errors.

Even though employing configuration command scripts represents an improvement over strictly manual configuration methods, the configuration management is still limited to the EMS configuration context in which each communications network element needs to be identified, and accessed using a custom specific EMS for each communications network element.

Take for example the Digital Subscriber Line (DSL) service activation configuration management scenario. DSL services are provided to customers of Plain Old Telephone Services (POTS) provisioned over copper-wire pairs known as local loops.

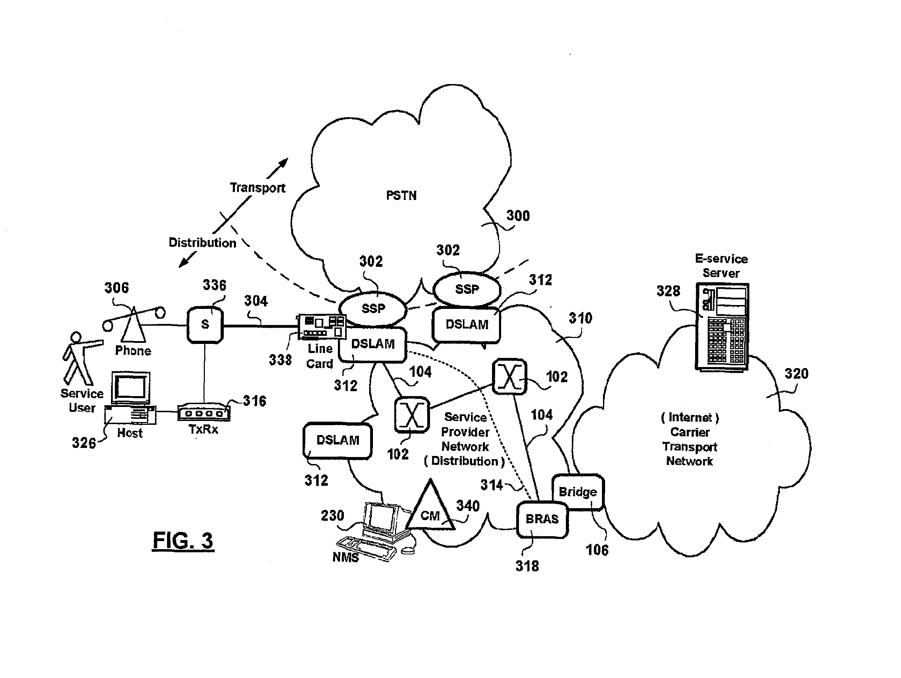

Making reference to FIG. 3, telephone services are provided via a circuit switched infrastructure which provides voice signal transport at a high quality of service. The use of circuit-switched technologies to provision data services end-to-end has been used in the infancy of data networking. However, despite the high quality of service enjoyed in using circuit-switched technologies, the limited strict bandwidth reservations and high operational costs the circuit switched infrastructure is unsuited for today's data service needs. The circuit-switched infrastructure includes a redundant signal transport infrastructure known as the Public Switched Telephone Network (PSTN) 300 having Signal Switching Points (SSP) local telephone exchange nodes 302 as transport network edge equipment. The local exchanges 302 and POTS service distribution local loops 304 represent a distribution circuit-switched network between the local telephone exchanges 304 and POTS CPE 306 including, telephone sets, facsimile machines, video conference terminals, etc.

The transport bandwidth afforded by the local loops 304 is typically larger than then the bandwidth necessary to provision POTS services - at least for POTS customers within a limited distance from a local telephone exchange 302. DSL services strive to make use of the telephone local-loop distribution network in order to achieve cost savings. It would be cost prohibitive to deploy a parallel distribution infrastructure for data service provisioning to customers.

In provisioning DSL services, a DSL Aggregation Module (DSLAM) 312, associated with a local telephone exchange node 302, is representative of edge communications network equipment with respect to a service provider data communications network 310. The DSLAM 322 makes use of the local loop 304 to exchange digital content with a DSL transceiver CPE 316. A host computer 326 is connected to the DSL transceiver 316. If POTS services and DSL services are provisioned concurrently a splitter 336 is used to differentiate the content conveyed over the local loop 304. The local exchange node 302 and the DSLAM 312 use a DSL line card 338 to send and receive POTS and DSL signals over/via the local loop 304.

The service provider network 310 is used to provide other data services and in order to provide the DSL services for DSL users 326, data links 314 must be established between the DSLAM node 312 servicing the DSL user 326 and a Broadband Remote Access Server (BRAS) 318. The service provider network 310 typically connects to a carrier transport network 320 (Internet) via a bridge node 106 to enable the service user interacting with the host computer 326 to access a server 328 provisioning electronic services. The service provider network 310 typically includes an Asynchronous Transfer Mode (ATM) network conveying data in accordance with the ATM data transport protocol, while the carrier transport network 320 provides data transport in accordance with the Internet (data transport) Protocol (IP). The host node 326 and the DSL transceiver 316 also exchange data in accordance with the IP protocol. The DSL transceiver 316 and the BRAS 318 provide protocol encapsulation services between the ATM and IP data transport protocols.

Prior art service provisioning configuration management in turning up a DSL subscriber includes, on a per- DSL subscriber basis:
- manual configuration of the DSL line card 338, employing a DSL line card EMS, for example, but not limited thereto, to train-up to a maximum content exchange speed which determines the maximum DSL data transfer rate over the local loop 304,
- manual configuration of the CPE DSL transceiver 316, for example, but not limited thereto, to specify protocol encapsulation options, transfer bandwidth, quality of service, etc.,
- manual configuration of the DSLAM 312, employing a DSLAM EMS, to define a cross-connect to switch content conveyed between the local loop 304 and a data link 314 at a specified quality of service,
- manual configuration of data network nodes 102, employing a Connection Manager (CM) 340, to define the data link 314, the definition of the data link 314 relates to establishing a connection path between the DSLAM 312 service provider network edge to a BRAS node 318 to convey data therebetween at a predefined quality of service, and
- manual configuration of the BRAS node 318, employing a BRAS EMS, for example, but not limited thereto, to specify protocol encapsulation options, transfer bandwidth, quality of service, a router interface, etc.

DSL services are provisioned at different levels of service and price typically characterized by the provision of varying the amounts of bandwidth. Typically the manual service activation includes configuring tens of operational parameters, each of which takes time to manually configure and the configuration thereof represents a potential source of error.

The proliferation of DSL service provisioning is limited by huge service activation and service provisioning overheads and costs associated with the configuration management necessary. Typically DSL services are overprovisioned to avoid distancing customers because of the lengthy manual service activation configuration overhead and the fear of introducing errors in changing the service provisioning configuration. There is a need to address the huge service activation configuration overheads in provisioning DSL services.

In a Network Management System (NMS) configuration context, instances of managed entities including: network nodes 102/106 (aggregators, multiplexers, switches, routers, bridges, gateways, demultiplexers, deaggregators, etc.), interface cards 124, ports 110, physical links 104, data links 314, etc. hold operational parameter specifications for corresponding managed field-installed communications network equipment. The managed entity instances form an interconnection hierarchy defined by associations between the managed entity instances, the managed entity instances and the associations defining a containment hierarchy.

An exemplary containment hierarchy 200 of managed communications network entities, shown in FIG. 2, is maintained for network management purposes. Each managed network entity instance in the containment hierarchy 200 corresponds to a field-installed physical managed entity or a defined logical managed entity in the realm of influence. Exemplary physical managed entities include, but are not limited to: physical links 104, physical ports 110, interface cards 124, line cards 338, shelves 120, network nodes 102, routers, bridges 106, gateways, aggregators, multiplexers, etc. Exemplary logical managed entities include, but are not limited to: network partitions 108, data links 314, virtual routers, etc.

An NMS 230 such as an Alcatel 5620 NMS interacts with the containment hierarchy 200 to provide an operator, typically, with a visual display of the managed communications network state. Further, the NMS 230 is used to interact with the field-installed communications network equipment either directly or indirectly via interaction with managed communication network entity instances in the containment hierarchy 200. Network management information is reported to the NMS 230 and status registers associated with the corresponding managed communications network entity instances in the containment hierarchy 200 are updated accordingly.

Current NMS 230 solutions such as the Alcatel 5620 NMS provide for centralized individual communications network entity configuration in an NMS configuration context without recourse to EMS solutions. There therefore is a need for improved centralized bulk DSL configuration management solutions providing a high level of network reliability, availability, and serviceability (RAS).

### Summary of the invention

In accordance with an aspect of the invention, a bulk DSL service provisioning and activation configuration tool for use in a network management context is provided. The bulk DSL service provisioning tool enables the specification of a programmable configuration request including specifying a target entity list and a configuration command job. In turning up a subscriber, the configuration command job is further populated with: operational parameter values used to configure a corresponding DSL port associated with the subscriber, a request to setup a data link between the DSL aggregation node and a broadband remote access server node, a request to setup a cross-connect at DSL aggregation node associated with the subscriber's DSL port, and operational parameter values used to configure. Further service activation may include configuring DSL customer premise equipment and a the broadband remote access server to provide protocol encapsulation of data to be conveyed at a selected bandwidth and a selected quality of service.

In accordance with another aspect of the invention, a method of performing controlled Digital Subscriber Line (DSL) service provisioning configuration management is provided. A programmable configuration request is retrieved from a store. A group of commands specified in a configuration template specified by the programmable configuration request are issued to a group of communications network target entities to effect large scale DSL service configuration. The execution of the group of issued commands is monitored. And, the issuing of commands is selectively suppressed on detecting command execution errors to prevent DSL service outage.

In accordance with yet another aspect of the invention, a method of performing controlled DSL service activation configuration management in turning up DSL services is provided. The method includes issuing a group of commands to: activate a DSL port of a DSL line card associated with a DSL aggregation node, request the setup of a data link between the DSL aggregation node and a broadband remote access server, and defining a cross-connect at the DSL aggregation node to enable data exchange between the DSL port and the data link. Further service activation includes configuring DSL customer premise equipment and a the broadband remote access server to provide protocol encapsulation of data to be conveyed at a selected bandwidth and a selected quality of service.

Advantages are derived from an ability to perform controlled large scale DSL service activation and provisioning configuration management in a network management context at reduced service provisioning overheads.

### Brief description of the drawings

The features and advantages of the invention will become more apparent from the following detailed description of the preferred embodiments with reference to the attached diagrams wherein:
FIG. 1 is a schematic diagram showing exemplary interconnected communication network equipment;
FIG. 2 is a schematic diagram showing an exemplary containment hierarchy enabling centralized network management of managed network entities;
FIG. 3 is a schematic diagram showing an exemplary deployment of communications network equipment employed in provisioning Digital Subscriber Line services to telephone service subscribers;
FIG. 4 is a flow diagram showing exemplary steps employed in effecting large scale DSL service configuration management, in accordance with the exemplary embodiment of the invention;
FIG. 5 is a schematic diagram showing an exemplary generic view of a human-machine interface used, in accordance with the exemplary embodiment of the invention, to select target communications network equipment to be configured;
FIG. 6 is another schematic diagram showing an exemplary generic view of a human-machine interface used, in accordance with the exemplary embodiment of the invention, to set DSL operational parameters for target communications network equipment to be configured via the a programmable configuration request; and
FIG. 7 is yet another schematic diagram showing an exemplary generic view of a human-machine interface used, in accordance with the exemplary embodiment of the invention, to effect controlled service configuration management.

It will be noted that in the attached diagrams like features bear similar labels.

### Detailed description of the embodiments

A co-pending co-assigned U.S. Patent Application attorney reference 14106-US entitled "A Network Management Programmable Configuration Management Framework" and incorporated herein by reference, provides a programmable configuration management infrastructure. The programmable configuration management infrastructure employs Programmable Configuration Requests (PCRs) to perform configuration management over a definable target list of managed communication network target entities subject to a definable schedule and configuration management policies. The programmable configuration management infrastructure provides for monitoring of configuration command execution and traps errors. In the event of detecting configuration command execution errors, the programmable configuration management infrastructure provides for restoring the configuration either for all target entities processed or for the target entities experiencing errors only as specified in the PCR definition. Recourse may be made to the validation of configuration change or configuration restoration commands as specified in the PCR definition. Configuration management policies may be employed to limit configuration management to specific time frames as well the rate at which configuration commands are issued may be tailored to prevent overuse of communication network resources. Benefits are derived from the programmable configuration management functionality leading to reduced configuration management overheads and enabling error contingency processing.

In accordance with an exemplary embodiment, a bulk DSL service activation and provisioning configuration tool and a bulk DSL service activation and provisioning configuration method are provided.

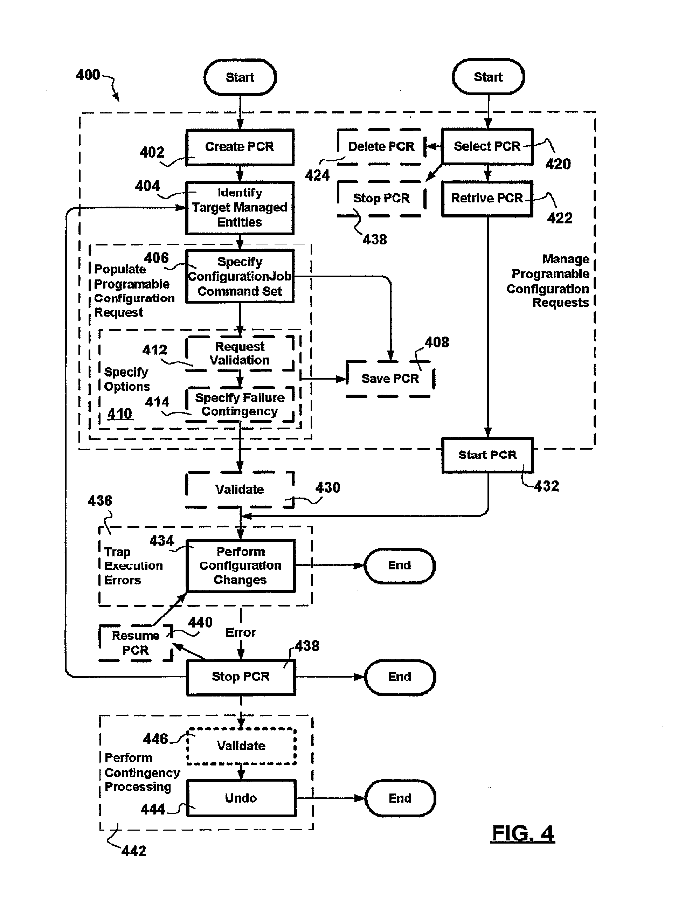

FIG. 4 is a flow diagram showing exemplary steps of an exemplary bulk DSL service provisioning configuration process 400, in accordance with the exemplary embodiment of the invention.

A bulk DSL service Provisioning Configuration Request (PCR) is created in step 402. A PCR is a single large scale configuration request typically scheduled to occur at a given time. Employing a PCR, configuration profile templates can be downloaded and applied to target DSLAM nodes 312. A PCR may also be employed in turning up a DSL subscriber (service activation) by: configuring DSL port (110) on a line card 338, defining a cross-connect at the corresponding DSLAM node 312, and setting up a data link 314 between the DSLAM node 312 and a BRAS 318. Further service activation includes configuring DSL CPE 316 and a the BRAS 318 to provide protocol encapsulation of data to be conveyed at a selected bandwidth and a selected quality of service.

Target DSL communications network edge equipment, including target DSL ports (110) and DSLAM nodes 312, is identified in step 404.

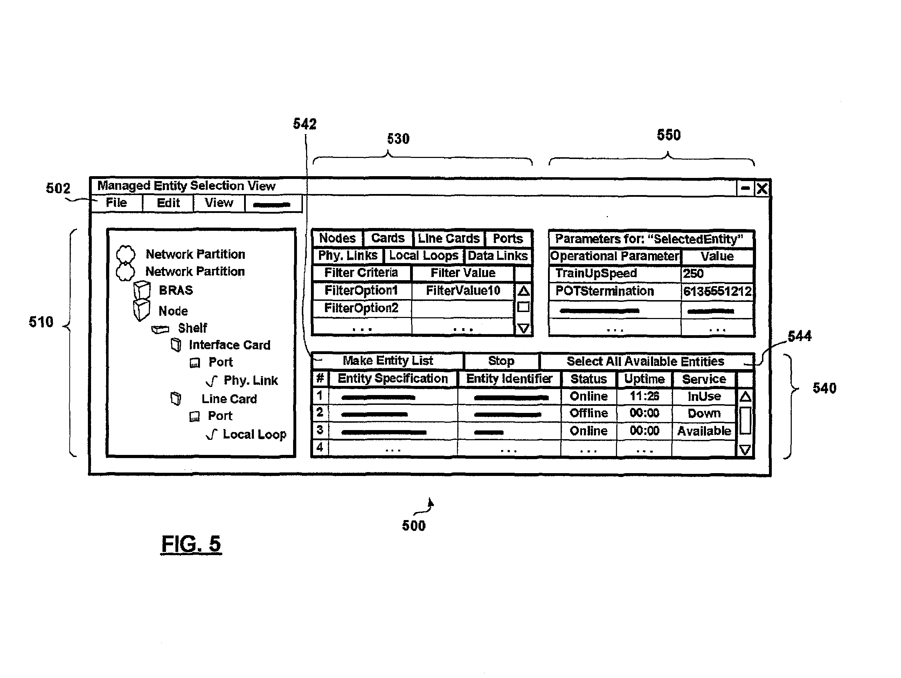

In identifying target DSL communications network edge equipment 404, an operator interacting with the bulk DSL service provisioning configuration tool in a network management context, is presented with a managed entity selection panel 500 exemplary shown in FIG. 5.

In accordance with the exemplary embodiment of the invention, functionality provided by a group of view panel components is combined to define the exemplary managed entity instance selection module having the exemplary user interface 500. The managed entity selection module 500 combines functionality of a tree 510, filter 530, list 540 view panel components, and possibly that of a parameter inspection view panel component 550.

A "File" menu option 502 enables retrieval of a pre-prepared list of target entities for configuration. Once retrieved, the list of target entities is presented in the list view panel 540 as will be described herein below.

In identifying a group of target network equipment, the containment hierarchy 200, under NMS 230 management is displayed in the tree view panel 510, and may be navigated by interacting with the tree view panel 510. The selection of an entity of the displayed containment hierarchy 200 creates a selection context including all dependent containment hierarchy entities. Exemplary selection contexts include, but are not limited to: network partition, network node (typically DSLAM 312), shelf, interface card (typically line cards 338), port, physical link, local loop, data link, etc. The variety of selection contexts is only limited by the level of modeling provided for network management in the containment hierarchy 200.

The inclusion of dependent containment hierarchy entities in the selection context may further be refined via interaction with the filter view panel 530. Various combinations of filter criteria and perhaps filter values may be employed in: network node (DSLAM), shelf, interface card (line card), port, physical link (local loop), data link, etc. configuration contexts activated, by interacting with same name tabs of the filter view panel 530, to discriminate between the managed entities in the containment hierarchy 200. For example, a DSLAM node type specific filter criterion (Alcatel 7300 DSLAM) may be used and the corresponding filter value may correspond to a software release version running thereon.

Validation of identified target entities is provided via the list view panel 540. A list of target entities may be displayed/refreshed by interacting with a "make list" button 542. The containment hierarchy 200, besides storing dependence relationships between managed entities, also stores managed entity specifiers holding identifiers and operational parameter values. In accordance with an exemplary implementation, all dependent branches of the containment hierarchy 200 in the selection context are traversed to extract a list of managed entity target references based on the filter criteria and filter values. The extracted list target entities is displayed in the list view panel 540.

Actual managed entity operational parameters (persistence) may be inspected, via the parameter view panel 550, by selecting individual managed entities via the tree view panel 510 and/or the list view panel 540. For example, the parameter view panel 550 displays a subscriber identification (telephone number) in selecting a DSL port on a DSL line card 318.

If a list of target entities is retrieved (502) from a file, the list is displayed in the list view panel 540. A list of target entities displayed in the list view panel 540 may also be stored in a file via the "File" menu option 502.

By traversing the containment hierarchy 400 in a network management context; the intricacies of multi-vendor equipment are hidden to the operator. This enables novice personnel to operate the solution therefore reducing downtime.

The filtered entity list results are provided, for example, as abbreviated managed entity records, perhaps including display fields for, but not limited to, managed entity: "specification", "identification", "provisioning status", "service provisioning", etc. Exemplary provisioning states include, but are not limited to: active "On Line" and inactive "Off Line" which represent a summary of overriding dependent entity statuses. The active "On Line" entities listed may further be categorized in accordance with service provisioning states including, but not limited to: "In Use" and "Available".

In order to effect expedient configuration changes, a "Select All Available Entities" button 544 may be interacted with to complete the target entity selection process. For example, if the selection of target entities is performed at the DSLAM node level while the PCR is intended to perform DSL port level configuration management, then configuration changes will be applied to all available DSL ports (110) on the DSALM node 312.

Having identified 404 the target entities to be configured, the operator is provided with the opportunity to select a configuration job to be applied to the identified target entities via interaction with an exemplary PCR specification view panel 600 shown in FIG. 6.

The operator interacts with the PCR specification view panel 600 to either select a configuration job or to specify a file holding a configuration job definition. Typically the configuration job includes a group of configuration commands to be executed on each target in the list, but the invention is not limited thereto. The specification of the configuration job in the DSL configuration context includes custom configuration templates and profiles, and facilities may be provided for defining thereof. Exemplary configuration templates/profiles include: Connection Admission Control, Traffic Engineering, etc. A filter option may be provided to identify a configuration template from a group of configuration templates.

For example, a "TurnUpSubscriber" configuration template is shown selected in FIG. 6. The operator is provided with the opportunity to tailor the TurnUpSubscriber configuration template in defining the PCR.

In particular, a DSL port train-up speed may be specified by exemplary selecting a service profile. The DSL CPE 316 operational parameters including but not limited to: bandwidth, content encapsulation, quality of service, connection identification (including virtual private network identification), and transport protocol may be specified. The setup of a data link 314 between the DSLAM 312 and the BRAS 318 may be requested. The definition of a cross-connect at the DSLAM 312 may be requested to convey data from the local loop 304 over the data link 314. In requesting the setup of a data link 314 a particular BRAS 318 may further be specified. Operational parameters may further be specified for service activation at the BRAS 318 including, but not limited to: content encapsulation, quality of service, and connection identification (including virtual private network identification).

Having specified the configuration job 406, the PCR may be saved 408. Populating the PCR 404 may include specifying PCR execution options 410.

Scheduling information may be entered including start and end times. The start and end specification format provides for date and time of day specifications. If the start time is left unspecified, then the PCR, once defined (and stored) is expected to take effect immediately. If the end time is left unspecified then the PCR is expected to take as long as it needs to complete processing unhindered. The specification of scheduling information may also request periodic execution of the PCR at a specified interval. The operator is provided with the option to specify the frequency in populating the PCR.

Policy information may also be specified. Although start and end times may be specified, when servicing PCRs in the network management context, it may not always be possible or desirable to comply with the start and end times, for example if the network infrastructure under management is experiencing a network failure, a lot of signaling bandwidth is being used up in restoring the network. A best time frame specification gives an indication as to when else the PCR may be run. For example, residential DSL services should be configured between 09:00 to 17:00 on weekdays when the subscribers are at work, and business DSL services should be changed between 00:00 and 08:00 when businesses are closed. Policy information may also include the specification of a rate at which target entities are to be configured. Using too high a rate may overburden the service provider's network 310 with a lot of signaling and configuration traffic. A minimum rate is typically specified to ensure that all targets are configured within a configuration time window.

The configuration job may optionally be validated before it is performed on the target list. The operator is provided with the opportunity to request validation 412 of the configuration job and also to specify a validation job. Validation is typically used to reduce the risk of erroneous configurations being performed.

A validation job may include a group of commands which may test a particular condition on the target entity without limiting the invention thereto. An exemplary test would include testing whether the target DSL ports 110 are activated but not in use so that configuration changes will not affect currently provisioned services. The validation job may include commands requesting that the current configuration of each target DSL port 110 entity be saved and stored potentially to be used later if the execution of the configuration job fails.

The operator is further provided with the opportunity to specify what actions are to be taken in case errors are encountered during PCR execution (step 414). An option enables the trapping of errors when performing configuration changes on the target entities. The execution of the PCR may be automatically stopped on detecting a first error. Stopping the PCR execution, as will be presented herein below, suppresses processing the next target entity in the target list.

The configuration changes performed up to and including the detected error may be optionally undone to reverse the effect of undesired configuration changes. As will be presented herein below, PCR execution may involve sending configuration commands to multiple target entities in parallel, therefore it may be possible that although "Stop on First Error" option was selected, a few target entities report configuration change errors. If the "Stop on Error" option was not selected, the configuration job is allowed to complete despite of encountered errors.

The programmable configuration management infrastructure further keeps track of the target entities processed, and the status of the configuration job performed on each target entity including encountered errors. The bulk DSL service provisioning configuration tool receives completion reports and error notifications on a per-PCR basis and on a per-target entity basis. Encountering errors in performing the configuration job is expected even if validation was successful. This is the case when a configuration change requires a resource to be available, the validation step finds the resource available but by the time the configuration job is to be run on the resource, the resource is in use.

The operator is provided with an option to request all configuration changes performed on all target entities up to and including the target entities reporting configuration errors to be undone, or only the configuration changes performed on the targets reporting configuration errors be undone.

The operator is further provided with facilities for the specification or selection of an undo job. Careful specification of the configuration job (or the validation job as mentioned above) may include saving the original configuration of the target entity before or at the beginning of the configuration job. The original configuration of the target entity may be stored in non-volatile storage at the field-installed communication network equipment itself (DSL line card 338) or in off-board storage. The undo job may include commands to restore the saved configuration from non-volatile storage or to download the previous configuration stored off-board.

The operator is further provided with the option of employing an undo validation job and specify or select thereof. The necessity of the undo validation job may be appreciated from the fact that resources may be used immediately after a configuration attempt regardless whether the configuration attempt succeeded or not.

Yet further, the operator is provided with an option to enable the configuration job to be performed again and again if unsuccessful until success is achieved. It may be necessary to introduce a waiting period between attempts.

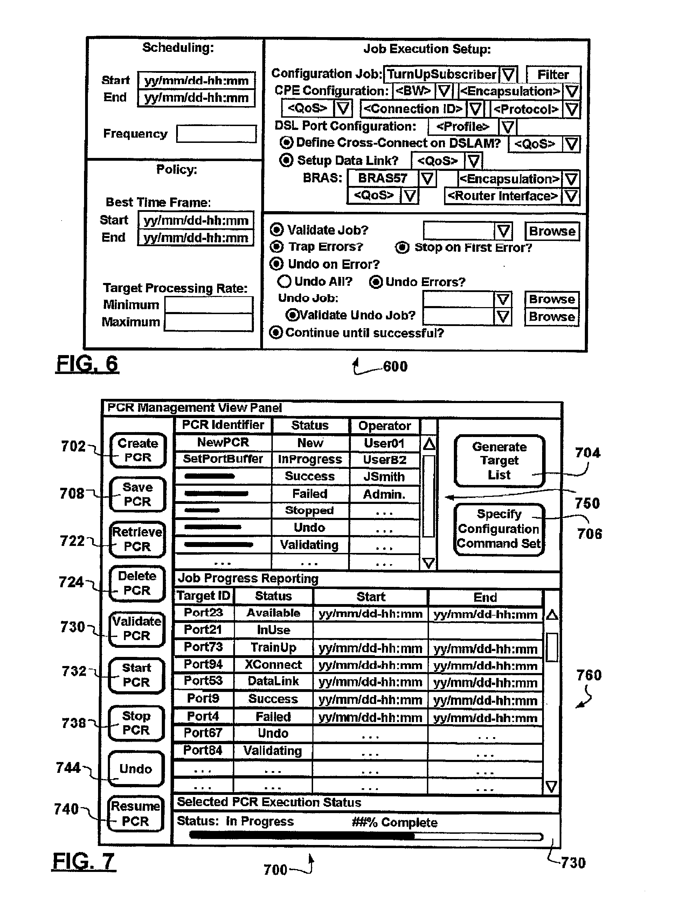

A created 402 and/or populated PCR may be saved 408 for later execution or modification. As shown in FIG. 7, the operator may interact with a PCR management view panel 700 presented by bulk DSL service provisioning configuration tool. Saving 708 (408) a PCR includes submitting the PCR for unattended execution by the programmable configuration management infrastructure. The execution of the PCR takes effect immediately if scheduling information and policy information is not specified.

The PCR management view panel 700 includes a list view component 750 for listing a group of created PCRs. Each PCR is labeled with the user name of the operator who owns the PCR, ownership is automatic at creation or may be transferred by an administrator user. The list of PCRs displayed may be limited to generic and operator owned PCRs. The administrator user may be presented with any and all PCRs saved with the programmable configuration management infrastructure.

A PCR selected 420 from the PCR list 750 may be retrieved 422 by interacting with a "Retrieve PCR" button 722. Alternatively the selected PCR 420 may be deleted 424 by interacting with a "Delete PCR" button 724.

Having selected 420 a PCR populated at least with a target list and a configuration job, the operator may actively effect configuration management on the target list. The overall status of the configuration management performed with respect to a particular PCR is shown in the PCR list 750 as:
- "New" for a newly created PCR which does not have both the target list and at least the configuration job specified;
- "In Progress" for a PCR in accordance with which targets are being configured;
- "Success" for a PCR which has completed without encountering errors;
- "Failed" for a PCR which has encountered errors but has not necessarily been stopped;
- "Undo" for a PCR which has encountered errors and configuration changes are being restored;
- "Validating" for a PCR in accordance with which targets are being validated prior to either configuration changes or configuration restoration;
- etc.

The PCR list 750 may also display scheduled start and end times for each PCR. Details cf the execution of the configuration job in accordance with the PCR specification, on a per-target basis, is shown via a configuration job progress reporting list 760. The job progress list 760 displays, for each target entity, a target identification (or subscriber identification), a summary status, and perhaps start and end times. On selecting a particular PCR from the list 750 entries in the job progress list 760 would show actual start and end times for each target entity. It may be possible that servicing of a PCR may lead to configuring target entities at different times as will be presented below.

The operator may interact with a "Validate PCR" button 730 to begin the validation 430 of the configuration job. Each target entity in the job progress reporting list 760 initially displays "Validating". The validation may fail, succeed or find the target unavailable with "Fail", "Success", "In Use" respective states being displayed. The reason for the failure may also be displayed either in the status field specifier or a separate field specifier. Unavailable target entities detected during validation may become available and the corresponding status thereof is changed to "Available" accordingly.

The operator may further interact with a "Start PCR" button 732 to begin performing configuration changes 434. Initially the status of each target displayed in the job progress list 760 is "In Progress". During the execution of the PCR, the status of each target entity changes to "In Use", "Success", or "Failed" as the configuration job is performed on each target entity. The configuration job execution status is reported regardless whether execution errors are trapped 436 or not. The reason for the failure may also be displayed either in the status field specifier or a separate field specifier.

In particular, in turning up subscribers, during the execution of the PCR, the reported status for each target entity may also display: "Train Up" during the configuration of the DSL port 110, "Cross Connect" (XConnect) during the definition of the cross-connect at the corresponding DSLAM node 312, or "DataLink" during the establishment of the data link 314 between the DSLAM node 312 and the BRAS 318.

The operator may further interact with a "Stop PCR" button 738. Stopping 438 the execution of a PCR prevents the configuration job to be executed on the next and subsequent target entities. Stopping 438 the execution of a selected 420 PCR which has not been scheduled for servicing has the effect of not starting the PCR.

The execution of the PCR may be resumed by interacting with a "Resume PCR" button 740 which resumes executing the configuration job on the next and subsequent target entities. The scheduling information of a PCR may be modified at any time, however, he resumption of servicing a PCR will be subject to the new schedule specified.

Should the execution of a PCR be stopped 438 due to an error, the operator may perform contingency PCR processing 442. By interacting with an "Undo" button 744, the operator may request the configuration of the target entities to be restored. If a PCR is selected 420 from the PCR management list 750, then interacting with the undo button 744, the previous configurations are restored in accordance with the PCR options specified 410 - for all previously processed target entities or only for target entities having experienced errors during the execution of the configuration job. If a target entity is selected from the job progress report list 760, then interacting with the undo button 744, the previous configuration of the target entity is restored in accordance with the PCR specification.

Once the undo button 744 is pressed, the status of each target entity affected is set to "Undo". If validation of the undo job is specified, then the affected target entity status will display "Validating" temporarily as validation 446 takes place. The status of the affected target entities will eventually display "Success" or "Fail" dependent on the outcome of the undo job.

A visual execution status report is provided via a progress bar 730. Once a target entity has been processed successfully the date and time at which the target entity was processed may also be displayed in the job progress list 760 (either in a separate column or by updating the start and end time specifications).

The solution makes use of NMS 230 functionality in configuring the selected target entities. In accordance with the exemplary embodiment of the invention, the programmable configuration management infrastructure implements configuration management functionality. All validate, start, stop, undo, resume, etc directives issued by interaction with the respective buttons are subjected to network configuration management policies specifying configuration management windows and maximum rates at which target entities are to be processed. The programmable configuration management infrastructure further enforces user authorization in issuing directives. Directives may be permitted to override policy restrictions.

The servicing of a PCR may be delegated to at least one worker process. Based on the PCR options specified 410, policies, and a viable time window, a multitude of worker processes may be employed each of which processes target entities at a run time determined target processing rate. As such a worker process processes target entities serially while multiple worker processes process target entities in parallel to provide controlled large scale configuration management. Whether target entities may be processed in parallel and the degree of pallalelism may be specified via policies, but the invention is not limited thereto. Optionally, the PCR specification may include parallel processing specifiers.

It may be possible that a viable time window can be found while policies in force impose a slow rate of target processing and serial target processing. The combination results in an inability to service a PCR in its entirety during a viable time window. Such a started PCR, will process as many target entities as possible during the viable time window and will be stopped and rescheduled for continued execution during a subsequent viable time window.

The embodiments presented are exemplary only and persons skilled in the art would appreciate that variations to the above described embodiments may be made without departing from the spirit of the invention. The scope of the invention is solely defined by the appended claims.

## Claims

1. A method of performing controlled Digital Subscriber Line (DSL) service provisioning configuration management comprising steps of:
**a.** retrieving a programmable configuration request from a store retrievably storing a plurality of programmable configuration requests;
**b.** issuing a plurality of commands specified in a configuration template specified by the programmable configuration request to a plurality of communications network target entities to effect large scale DSL service configuration;
**c.** monitoring the execution of the issued commands; and
**d.** selectively suppressing the issuing of commands on detecting command execution errors to prevent DSL service outage.

2. The method of performing controlled DSL service provisioning configuration management as claimed in claim 1, wherein prior to retrieving the programmable configuration request, the method further comprises a step of: performing an operation on at least one programmable configuration request from creating, defining, saving, listing, and retrieving the at least one programmable configuration request.

3. The method of performing controlled DSL service provisioning configuration management as claimed in claim 2, wherein defining a DSL service provisioning PCR, the method further comprises a step of: identifying the plurality of communications network target entities.

4. The method of performing controlled DSL service provisioning configuration management as claimed in claim 3, wherein identifying the plurality of communications network target entities, the method further comprises a step of: filtering a plurality of managed entities in a managed communication network on the basis of one of DSL aggregation node software release version, DSL aggregation node identifier, shelf, slot, DSL line card, and DSL port.

5. The method of performing controlled DSL service provisioning configuration management as claimed in claim 2, wherein defining a DSL service provisioning PCR, the method further, comprises a step of: selecting a configuration template from one of: access configuration, service level configuration, connection admission control, and engineering configuration templates.

6. The method of performing controlled DSL service provisioning configuration management as claimed in claim 1, wherein retrieving the programmable configuration request, the method further comprises a step of: receiving a directive via a user interface to perform DSL service provisioning configuration management as specified in the programmable configuration request.

7. The method of performing controlled DSL service provisioning configuration management as claimed in claim 1, wherein prior to retrieving the programmable configuration request, the method further comprises step of: scheduling the programmable configuration request to be serviced in accordance with one of immediate execution, execution at a specified future time, and periodic execution at a specified time interval.

8. The method of performing controlled DSL service provisioning configuration management as claimed in claim 1, wherein issuing the plurality of commands, the method further comprises the step of: spawning at least one worker process to service the retrieved programmable configuration request.

9. The method of performing controlled DSL service provisioning configuration management as claimed in claim 8, wherein spawning a plurality of worker processes to service the retrieved programmable configuration request, the method further comprises a step of: issuing the plurality of commands in parallel to effect bulk configuration of the plurality of communications network entities.

10. The method of performing controlled DSL service provisioning configuration management as claimed in claim 1, wherein issuing the plurality of commands, the method further comprises the step of: issuing the plurality of commands in sequence to effect serial batch configuration of the plurality of communications network target entities.

11. The method of performing controlled DSL service provisioning configuration management as claimed in claim 1, wherein subsequent to selectively suppressing the issuing of commands, the method comprises a step of: resuming command issuing.

12. The method of performing controlled DSL service provisioning configuration management as claimed in claim 1, wherein subsequent to selectively suppressing the issuing of commands, the method comprises a step of: issuing at least one configuration restoring command to undo configuration effected by previously issued commands.

13. The method of performing controlled DSL service provisioning configuration management as claimed in claim 12, wherein issuing the at least one configuration restoring command, the method further comprises a step of: issuing the at least one configuration restoring command to a communications network target entity reporting at least one command execution error.

14. The method of performing controlled DSL service provisioning configuration management as claimed in claim 12, wherein prior to issuing the at least one configuration restoring command, the method further comprises a step of: validating the execution of the at least one configuration restoring command.

15. The method of performing controlled DSL service provisioning configuration management as claimed in claim 12, wherein issuing the plurality of commands to effect the configuration of the plurality of communications network entities, the method further comprises a step of: tracking the progress of configuring the plurality of communications network target entities.

16. The method of performing controlled DSL service provisioning configuration management as claimed in claim 1, wherein issuing the plurality of commands, the method further comprises the steps of:
**a.** activating a DSL port of a DSL line card associated with a DSL aggregation node;
**b.** requesting the setup of a data link between the DSL aggregation node and a broadband remote access server; and
**c.** defining a cross-connect at the DSL aggregation node to enable data exchange between the DSL port and the data link, the enabling large scale DSL service activation to be performed in a network management context with improved efficiency.

17. The method of performing controlled DSL service provisioning configuration management as claimed in claim 16, wherein the method further comprises steps of:
**a.** setting operational parameters of a corresponding DSL customer premise equipment; and
**b.** setting operational parameters of the broadband remote access server,
the setting of operational parameters of the DSL customer premise equipment and the broadband remote access server providing service activation end-to-end.
